# EUROPÄISCHE PATENTSCHRIFT

(11) **EP 0 526 891 B1**
(45) Veröffentlichungstag und Bekanntmachung des Hinweises auf die Patenterteilung: **19.02.1997**
(21) Anmeldenummer: 92113389.8
(22) Anmeldetag: 06.08.1992
(51) Int. Cl.: C08F 10/02, C08F 4/655, C08F 4/656, C08F 4/657

(54) **Verfahren zur Herstellung von Ethylen(co)polymeren**
Process for producing ethylene (co)polymers
Procédé de préparation de (co)polymères de l'éthylène

(30) Priorität: 07.08.1991 DE 4126093
(43) Veröffentlichungstag der Anmeldung: 10.02.1993
(73) Patentinhaber: HOECHST AKTIENGESELLSCHAFT, 65926 Frankfurt am Main (DE)
(72) Erfinder: Heinrich, Andreas, Dr., W-6238 Hofheim am Taunus (DE); Böhm, Ludwig, Dr., W-6234 Hattersheim am Main (DE); Scholz, Hans-Albrecht, W-6203 Hochheim (DE)

(56) Entgegenhaltungen:
- EP-A- 0 007 800
- EP-A- 0 083 456
- EP-A- 0 398 167
- AT-A- 366 706
- DE-A- 2 543 437
- DE-A- 3 215 655
- US-A- 4 562 170

## Beschreibung

Die Erfindung bezieht sich auf ein Verfahren zur (Co-)polymerisation von Ethylen zu grobkörnigen Polymerpartikeln mit enger Korngrößenverteilung und hoher Schüttdichte durch Einsatz von Katalysatorteilchen, die durch Nachbehandlung Ti(lll)-haltiger Ziegler-Natta-Katalysatoren, deren Trägerkomponente ein Magnesiumalkoholat ist, mit TiCl₄ erhalten werden.

Bekannt sind Verfahren zur Herstellung von Ti(III)-haltigen Ziegler-NattaKatalysatoren, die als Trägerkomponente ein suspendiertes, ein gelöstes oder ein lösliches Magnesiumalkoholat oder eine Gel-Dispersion eines Magnesiumalkoholats vorsehen (vgl. EP 302 242, EP 398 167, DE 33 25 221, DE 40 17 661). Diese Katalysatoren liefern bei der (Co-)polymerisation von Ethylen in der Regel Ethylen(co-)polymere mit enger Molmassenverteilung.

Die DE-A-25 43 437 beschreibt ein Verfahren, bei dem in einer Eintopfreaktion aus Alkohol, Magnesium und AlCl₂R in Anwesenheit einer O-haltigen organischen Metallverbindung und von Zirkontetrachlorid ein Katalysator hergestellt wird, mit dem sich Copolymere aus Olefinen herstellen lassen. Diese Copolymere sind aber in bezug auf die Breite ihrer Molmassenverteilung immer noch verbesserungswürdig.

Die Aufgabe bestand darin, ein einfaches Verfahren zur Herstellung von Katalysatoren zu finden, welche Polymere mit großem mittleren und einheitlichen Partikeldurchmesser und mit hoher Schüttdichte herzustellen gestatten. Weiterhin sollten diese Polymere eine mittlere bis breite Mollmassenverteilung (MFR 21,6/5 größer oder gleich 11) besitzen.

Es wurde nun gefunden, daß diese Aufgabe gelöst werden kann, wenn man ein Magnesiumalkoholat mit Titantetrachlorid und danach mit einer Aluminiumverbindung reagieren läßt, das Übergangsmetall zu einer niedrigeren Wertigkeitsstufe reduziert und das Reaktionsprodukt mit Titantetrachlorid nachbehandelt.

Die Erfindung betrifft somit ein Verfahren zur Herstellung eines Ethylenpolymers mit einheitlicher grober Partikelform und hoher Schüttdichte durch Polymerisation von Ethylen oder von Ethylen mit bis zu 10 Gew.-%, bezogen auf die Gesamtmenge der Monomeren, eines 1-Olefins der Formel R⁶-CH=CH₂, worin R⁶ einen gradkettigen oder verzweigten Alkylrest mit 1 bis 12 C-Atomen bedeutet, in Suspension, in Lösung oder in der Gasphase, bei einer Temperatur von 20 bis 120°C und einem Druck von 2 bis 60 bar, in Gegenwart eines Katalysators bestehend aus dem Reaktionsprodukt eines Magnesiumalkoholats mit einer vierwertigen Titanverbindung und einer aluminiumorganischen Verbindung, welches dadurch gekennzeichnet ist, daß die Polymerisation durchgeführt wird in Gegenwart eines Katalysators, welcher aus a) dem Gesamtprodukt aus der Reaktion
a1) eines in einem inerten Lösemittel gelösten, suspendierten oder als Gel dispergierten Magnesiumalkoholats der Formel I

   Mg(OR¹)(OR²) (I),

   worin R¹ und R² gleich sind und einen unverzweigten oder verzweigten Alkylrest mit 1 bis 20 C-Atomen oder einen Rest -(CH₂)ₙOR³ bedeuten, wobei R³ ein Alkylrest mit 1 bis 4 C-Atomen und n eine ganze Zahl von 2 bis 6 ist, mit
a2)

   TiCl₄ (II),

   und
a3) einer aluminiumorganischen Verbindung der Formel III

   AlR⁵ ₚX₃₋ₚ (III),

   worin R⁵ einen Alkylrest mit 1 bis 6 C-Atomen, X ein Halogenatom bedeuten und p eine Zahl von null bis 3 ist, im Verhältnis Mg : M¹ : Al wie 1 zu 0,05 bis 10 zu 0,01 bis 4,
   Waschen des Feststoffes mit einem inerten Lösemittel, und Umsetzung mit
a4)

   TiCl₄ (IV),

   im Verhältnis (II) zu (IV) wie 1 zu 0,2 bis 100 und Waschen des Feststoffes mit einem inerten Lösemittel, und
b) einem Aluminiumtrialkyl mit 1 bis 6 C-Atomen in den Alkylresten oder dem Umsetzungsprodukt eines Aluminiumtrialkyls oder Aluminiumdialkylhydrids mit Isopren besteht.

Zur Herstellung der erfindungsgemäß einzusetzenden Mischkatalysatorkomponente wird ein Magnesiumalkoholat der Formel (I)

Mg(OR¹)(OR²) (I)

verwendet. In dieser Formel sind R¹ und R² gleich oder verschieden und bedeuten einen unverzweigten oder verzweigten Alkylrest mit 1 bis 20 C-Atomen, vorzugsweise 2 bis 10 C-Atomen, oder einen Rest -(CH₂)ₙOR³, wobei R³ ein C₁ bis C₄-, vorzugsweise C₁ bis C₂-Alkylrest und n eine ganze Zahl von 2 bis 6 ist.

### Beispiele für derartige Magnesiumalkoholate sind

Magnesiumbis-methyloxid,
Magnesiumbis-ethyloxid,
Magnesiumbis-i-propyloxid,
Magnesiumbis-n-propyloxid,
Magnesiumbis-n-butyloxid,
Magnesium-(methoxy)-ethyloxid,
Magnesium-(ethoxy)-n-propyloxid,
Magnesiumbis-(2-methyl-1-pentyloxid),
Magnesiumbis-(2-methyl-1-hexyloxid),
Magnesiumbis-(2-methyl-1-heptyloxid),
Magnesiumbis-(2-ethyl-1-pentyloxid),
Magnesiumbis-(2-ethyl-1-hexyloxid),
Magnesiumbis-(2-ethyl-1-heptyloxid),
Magnesiumbis-(2-propyl-1-heptyloxid),
Magnesiumbis-(2-methoxy-1-ethoxid),
Magnesiumbis-(3-methoxy-1-propyloxid),
Magnesiumbis-(4-methoxy-1-butyloxid),
Magnesiumbis-(6-methoxy-1-hexyloxid),
Magnesiumbis-(2-ethoxy-1-ethoxid),
Magnesiumbis-(3-ethoxy-1-propyloxid),
Magnesiumbis-(4-ethoxy-1-butyloxid),
Magnesiumbis-(6-ethoxy-1-hexyloxid),
Magnesiumbis-pentyloxid,
Magnesiumbis-hexyloxid.

Bevorzugt verwendet werden die einfachen Magnesiumalkoholate wie Magnesiumdiethylat, Magnesium-di-n-propylat und Magnesium-di-i-butylat.
Brauchbare Magnesiumalkoholate sind auch die Umsetzungsprodukte von Magnesiummetall, Magnesiumalkylen oder Magnesiumalkoholaten mit Alkoholen R¹0H (R¹ wie vorstehend). Bevorzugt von diesen Produkten ist das Umsetzungsprodukt eines Magnesiumalkoholats mit einem Alkohol R¹OH in Gegenwart von 0,02 - 0,2 mol-% Triethylaluminium (als Viskositätserniedriger) bei 100 bis 140°C.

Das Magnesiumalkoholat wird als Suspension, Lösung oder als Gel-Dispersion eingesetzt.

Das Magnesiumalkoholat wird zunächst mit

TiCl₄

Der dritte Reaktionspartner zur Herstellung der Katalysatorkomponente a ist eine aluminiumorganische Verbindung der Formel III

AlR⁴ ₚX₃₋ₚ (III),

worin R⁴ einen Alkylrest mit 1 bis 6, vorzugsweise 1 bis 4 C-Atomen, X ein Halogenatom, vorzugsweise Chlor, und p eine Zahl von null bis 3, vorzugsweise 1 bis 2, oder das Umsetzungsprodukt von Aluminiumtrialkylen oder Aluminiumdialkylhydriden mit Dienen, vorzugsweise Isopren.

Geeignete aluminiumorganische Verbindungen sind:

Al(C₂H₅)₃, Al(C₂H₅)₂Cl, Al₂(C₂H₅)₃Cl₃, Al(C₂H₅)Cl₂, AlCl₃, Al(C₃H₇)₃, Al(C₃H₇)₂Cl, Al₂(C₃H₇)₃Cl₃, Al(C₃H₇)Cl₂, Al(C₄H₉)₃, Al(C₄H₉)₂Cl, Al₂(C₄H₉)₃Cl₃, Al(C₄H₉)Cl₂ sowie Mono- und Dihalogenide verschiedener Zusammensetzung. Vorzugsweise werden aus dieser Gruppe Al₂(C₂H₅)₃Cl₃ und Al(C₂H₅)₃, verwendet.

Die Bildung der Katalysatorkomponente a erfolgt auf folgenden möglichen Wegen, wobei jeder Reaktionspartner auch als Mehrzahl gleichartiger Verbindungen eingesetzt werden kann.
i) Zu einer Lösung, Dispersion oder Suspension des Magnesiumalkoholats wird die Lösung von Titantetrachlorid gegeben und der entstehende Feststoff sodann mit einer aluminiumorganischen Verbindung der Formel III umgesetzt.
ii) Die Lösung oder Dispersion eines Magnesiumalkoholats und die Lösung von Titantetrachlorid werden gleichzeitig in vorgelegtes Lösemittel gegeben und die entstehende Suspension mit einer alumini umorganischen Verbindung der Formel III umgesetzt.
iii) Die Lösung oder Dispersion eines Magnesiumalkoholats, die Lösung von Titantetrachlorid und eine aluminiumorganische Verbindung der Formel III werden gleichzeitig in vorgelegtem Dispergiermittel miteinander umgesetzt.
iv) Zu einer Lösung, Dispersion oder Suspension des Magnesiumalkoholats wird die Lösung von Titantetrachlorid gegeben und der entstehende Feststoff gewaschen und sodann mit einer aluminiumorganischen Verbindung der Formel III umgesetzt.
v) Die Lösung oder Dispersion eines Magnesiumalkoholats und die Lösung von Titantetrachlorid werden gleichzeitig in vorgelegtes Lösemittel gegeben und der entstehende Feststoff gewaschen und sodann mit einer aluminiumorganischen Verbindung der Formel III umgesetzt.
Weiterhin ist die Herstellung durch eine Kombination der Wege i) bis v) möglich.

Die Umsetzung des Magnesiumalkoholats mit Titantetrachlorid erfolgt bei einer Temperatur von -50 bis 150°C, vorzugsweise bei -20 bis 120°C, innerhalb von 0,1 bis 12 Stunden, vorzugsweise 0,13 bis 6 Stunden.

Die Umsetzung mit der aluminiumorganischen Verbindung erfolgt bei einer Temperatur von -50 bis 150°C, vorzugsweise bei -20 bis 130°C, besonders bevorzugt 20 bis 120°C, innerhalb von 0,1 bis 10 Stunden, vorzugsweise 0,25 bis 4 Stunden.

Als inerte Lösemittel für die vorgenannten Umsetzungen eignen sich aliphatische und cycloaliphatische Kohlenwasserstoffe wie Butan, Pentan, Hexan, Heptan, Cyclohexan, Isooctan, sowie aromatische Kohlenwasserstoffe wie Benzol und Xylol. Auch Benzin und hydrierte Dieselälfraktionen, die sorgfältig von Sauerstoff, Schwefelverbindungen und Feuchtigkeit befreit worden sind, können eingesetzt werden.

Magnesiumalkoholat, Titantetrachlorid (M¹) und aluminiumorganische Verbindung der Formel III werden im Verhältnis Mg : M¹ : Al wie 1 zu 0,05 bis 10 zu 0,01 bis 4, vorzugsweise 1 zu 0,08 bis 4 zu 0,02 bis 3 umgesetzt.

Im Anschluß an die Umsetzung wird die Suspension des Feststoffes 0 bis 48 Stunden, vorzugsweise 0,5 bis 16 Stunden, bei 80 bis 150°C, vorzugsweise 100 bis 120°C gerührt und danach solange gewaschen, bis die überstehende Mutterlauge Cl- und Ti (Zr,Hf)-frei ist.

Der Feststoff wird anschließend mit einer chlorierenden Verbindung der Formel IV

TiCl₄ (IV),

im Verhältnis (II) zu (IV) wie 1 zu 0,2 bis 100, vorzugsweise 1 zu 1 bis 50, insbesondere 1 zu 1,5 bis 20, versetzt und 0,1 bis 100 , vorzugsweise 0 bis 48, insbesondere 1 bis 30 Stunden bei einer Temperatur von 50 bis 150°C gerührt. Danach wird die so gewonnene Katalysatorkomponente a zur Entfernung löslicher Verbindungen mehrfach gewaschen.

Als Katalysatorkomponente b wird ein Aluminiumtrialkyl mit 1 bis 6 C-Atomen in den Alkylresten, wie z.B. Triethylaluminium, Triisobutylaluminium, Triisohexylaluminium, oder das als Aluminiumisoprenyl bekannte Umsetzungsprodukt eines Aluminiumtrialkyls oder -dialkylhydrids mit Isopren verwendet. Bevorzugt sind Triethylaluminium und Aluminiumisoprenyl.

Es ist möglich, die Katalysatorkomponente a mit einem Aluminiumtrialkyl vorzuaktivieren. Dadurch wird die Lagerfähigkeit der Komponente bis zur Polymerisation verbessert und die Polymerisationsaktivität gesteigert. Zum Beginn der Polymerisation findet dann die eigentliche Aktivierung mit der Komponente b statt.

Die Polymerisation wird ein- oder zweistufig, vorzugsweise als Suspensionspolymerisation, in einem inerten Dispergiermittel durchgeführt. Als Dispergiermittel sind die gleichen organischen Lösemittel geeignet, wie sie zur Herstellung der Katalysatorkomponente a beschrieben wurden. Die Polymerisation in der Gasphase ist jedoch auch möglich. Die Polymerisationstemperatur beträgt 20 bis 120, bevorzugt 70 bis 90°C; der Druck liegt im Bereich von 2 bis 60, vorzugsweise 4 bis 20 bar.

Für den Fall, daß die Reaktion zweistufig durchgeführt wird, liegt das Mengenverhältnis der in den Stufen 1 und 2 jeweils gebildeten Polyolefine im Bereich von 30 zu 70 bis 70 zu 30.

Mit dem erfindungsgemäß verwendeten Katalysatorsystem wird Ethylen oder Ethylen mit bis zu 10 Gew.-%, bezogen auf die Gesamtmonomermenge, eines 1-Olefins der Formel R⁷-CH=CH₂, worin R⁷ einen geradkettigen oder verzweigten Alkylrest mit 1 bis 12, vorzugsweise 1 bis 10 C-Atomen, bedeutet, polymerisiert. Beispiele sind Propylen, 1-Buten, 1-Penten, 1-Hexen, 1-Octen, 4-Methylpenten-1. Vorzugsweise werden Propylen, 1-Buten und 1-Hexen eingesetzt. Dabei wird das Comonomere vorzugsweise in der ersten Stufe, in welcher ein Polymerisat mit der höheren Molmasse entsteht, eingeführt.

Das Gesamtpolymerisat aus der zweiten Stufe wird in bekannter Weise vom Dispergiermittel abgetrennt und getrocknet.

Kennzeichnend für die Katalysatorkomponente a ist ein gegenüber dem Stand der Technik erhöhtes Cl/Übergangsmetall-Verhältnis und im Falle der Umsetzung mit TiCl₄ ein erhöhter Titangehalt, wobei der Gehalt an Ti³⁺ (Zr³⁺, Hf³⁺) nicht reduziert wird. Damit ist eine Steigerung der mmol-Aktivität des Katalysators verbunden. Die zusätzliche Fixierung von Titan(IV)verbindungen bedingt eine Steigerung der Gramm-Aktivität (kg PE/g Komponente a), dadurch eine Erhöhung des mittleren Korndurchmessers und eine Verbreiterung der Molmassenverteilung.

Die Korngrößenverteilung des Polymeren ist in hohem Maße einheitlich.

Die Molmasse der Polyolefine wird effizient durch Wasserstoff geregelt.

Die nachfolgenden Beispiele sollen die Erfindung erläutern.

Es bedeuten:
- KZA_{red}: Reduzierte Katalysator- Zeit- Aktivität
- MFI 190/5: Schmelzindex nach DIN 53735, gemessen bei 190°C und einer Belastung von 5 kg
- MFI 190/15: gemessen bei 190°C bei einer
- MFI 190/21,6: Belastung von 15 bzw. 21,6 kg
- MFR 15/5: MFI 190/15 / MFI 190/5
- MFR 21,6/5: MFI 190/21,6 / MFI 190/5
- d₅₀: mittlere Teilchengröße, erhalten durch Siebfraktionierung
- SD: Schüttdichte, gemessen nach DIN 53468
- Cl_{korr.}: Cl - 2 Mg
- VZ: Viskositätszahl nach ISO / R 1191

### Vergleichsbeispiel A

### Herstellung der Katalysatorkomponente a₀

In einem 2 dm³-Reaktor mit Rührer, Thermometer und Tropftrichter wurden 114,4 g Mg(OC₂H₅)₂ und 1 dm³ Dieselöl vorgelegt. In 6 h wurden bei 90°C 500 cm³ TCl₄, zudosiert. Anschließend wurde das weiße Produkt mehrmals gewaschen, bis der Ti-Gehalt der Suspension kleiner als 5 mmol/dm³ war. Die Suspension wurde anschließend mit 80 cm³ einer 1 molaren Lösung von Triethylaluminium in Dieselöl versetzt und 12 h bei 120°C gerührt. Der braunschwarze Feststoff wurde abgetrennt und viermal mit 0,5 dm³ Dieselöl gewaschen.
Analyse: Mg : Ti : Cl = 1 : 0,065: 2,102; Ti³⁺/Ti⁴⁺ = 0,98; Cl_{korr.}/Ti = 1,57;.

### Vergleichsbeispiel B

### Polymerisation von Ethylen

Ein Teil der Suspension von Vergleichbeispiel A wurde mit dem Dieselöl auf eine Ti-Konzentration von 0,01 mol/dm³ verdünnt. In einem 1,5 dm³-Stahlautoklaven, der mit 750 cm³ Dieselöl beschickt wurde, wurden bei 85°C unter N₂-Überlagerung 3 cm³ einer 1 molaren Triethylaluminium-Lösung und 1 cm³ der verdünnten Suspension gegeben. Danach wurde der Autoklav zweimal mit Wasserstoff gespült und 2,15 bar Wasserstoff sowie 4,85 bar Ethylen aufgedrückt. Der Gesamtdruck von 7 bar wurde über 2 h gehalten, indem das verbrauchte Ethylen nachdosiert wurde. Die Polymerisation wurde durch Entspannen der Gase abgebrochen und das Polymer durch Filtration und Trocknung vom Dispergiermittel abgetrennt. Es wurden 208 g Polyethylen mit einem MFI 190/5 von 1,1 g/10 min und einem MFR 21,6/5 von 10,2 gebildet. Dies entspicht einer KZA_{red} von 2144 g/mmol Ti.bar.h bzw. einer KA von 12,6 kg PE/g Komponente a. Das Pulver hatte eine Schüttdichte von 360 g/dm³ und einen Feinkornanteil < 100 µm von 8 Gew.-%. Die mittlere Korngröße d₅₀ betrug 197µm.

### Beispiel 1

### Herstellung der Katalysatorkomponente a

153,8 cm³ (10 mmol Ti) der Suspension der Katalysatorkomponente a₀ von Vergleichsbeispiel A wurde in einen 250 cm³-Reaktor überführt und bei 120°C mit 8,8 cm³ TiCl₄ versetzt. Die Mischung wurde bei dieser Temperatur 5 h gerührt und anschließend bei 70°C sechsmal mit 200 cm³ Dieselöl gewaschen (Ti in der Mutterlauge < 1 mmol/dm³).
Analyse: Mg : Ti : Cl = 1 : 0,108: 2,253; Ti³⁺/Ti⁴⁺ = 0,57; Cl_{korr.}/Ti = 2,34;

Die Polymerisation von Ethylen erfolgte entsprechend Vergleichsbeispiel B. Man erhielt 219 g Polyethylen mit einem MFI 190/5 von 0,92 g/10 min und einem MFR 21,6/5 von 13,4. Dies entspicht einer KZA_{red} von 2257 g/mmol Ti.bar.h bzw. einer KA von 20,7 kg PE/g Komponente a. Das Pulver hatte eine Schüttdichte von 360 g/dm³ und einen Feinkornanteil von 4 Gew.-%. Die mittlere Korngröße d₅₀ betrug 237µm.

### Vergleichsbeispiel C

In einem 4 dm³-Reaktor wurden 228,8 g Mg(OEt)₂ von Nippon Soda und 1600 cm³ Dieselöl mit einem Hochgeschwindigkeitsrührer (Ultra-Turrax der Fa. IKA) in 24 h bei Raumtemperatur und unter Argonüberlagerung dispergiert. 180 cm³ der 1,11 molaren Suspension wurden in 4 h bei 85°C mit 200 cm³ einer 0,3 molaren TiCl₄-Lösung im Dieselöl und in 2 h bei 110°C mit 200 cm³ einer 0,8 molaren Al₂Et₃Cl₃₋ Lösung im Dieselöl umgesetzt. Anschließend wurde der Ansatz noch 1 h bei 110°C gerührt.Danach wurde die Suspension bei 110°C filtriert und viermal mit 400 cm³ heißem Dieselöl gewaschen. Das rotbraune Produkt wurde in 200 cm³ kaltem Dieselöl aufgenommen.
Die Analysenergebnisse sind in Tabelle 2 wiedergegeben.

Die Polymerisation von Ethylen erfolgte entsprechend Vergleichbeispiel B, allerdings bei 2 bar H₂ und 5 bar C₂H₄. Die Polymerisationsergebnisse sowie die verwendeten Katalysator- und Co-Katalysatormengen sind in Tabelle 3 wiedergegeben.

### Vergleichsbeispiel D

In einem 4 dm³-Reaktor wurden 228,8 g Mg(OEt)₂ und 1600 cm³ Dieselöl mit einem Hochgeschwindigkeitsrührer (Ultra-Turrax der Fa. IKA) in 20 h bei Raumtemperatur und unter Argonüberlagerung dispergiert. 180 cm³ der 1,11 molaren Suspension wurden in 4 h bei 85°C mit 220 cm³ einer 0,3 molaren TiCl₄-Lösung im Dieselöl und in 2 h bei 130°C mit 200 cm³ einer 0,8 molaren Al₂Et₃Cl₃-Lösung im Dieselöl umgesetzt. Anschließend wurde der Ansatz noch 1h bei 110°C gerührt. Danach wurde die Suspension bei 25°C fünfmal mit 400 cm³ Dieselöl gewaschen und das dunkelbraune Produkt in 200 cm³ Dieselöl aufgenommen. Die Analysenergebnisse sind in Tabelle 2 wiedergegeben.

Die Polymerisation von Ethylen erfolgte entsprechend Vergleichbeispiel B, allerdings bei 2 bar H₂ und 5 bar C₂H₄. Die Polymerisationsergebnisse sowie die verwendeten Katalysator- und Co-Katalysatormengen sind in Tabelle 3 wiedergegeben.

### Vergleichsbeispiel E

In einem 4 dm³-Reaktor wurden zu 800 cm³ Dieselöl innerhalb von 1 h bei 25°C gleichzeitig 800 cm³ einer 0,5 molaren Lösung von Magnesium-2-methylpentyloxid in Dieselöl, 400 cm³ einer 0,3 molaren Lösung von TCl₄, in Dieslöl und 400 cm³ einer 0,8 molaren Lösung von Al₂Et₃Cl₃ in Dieselöl zudosiert. Anschließend wurde der Ansatz mit 400cm³ Dieselöl verdünnt und auf 110°C erhitzt und 2 h bei dieser Temperatur gerührt. Die Suspension wurde bei 100°C filtriert und das rotbraune Produkt zweimal mit 800 cm³ heißem Dieselöl gewaschen.
Die Analysenergebnisse sind in Tabelle 2 wiedergegeben.

Die Polymerisation von Ethylen erfolgte entsprechend Vergleichbeispiel B, allerdings bei 2 bar H₂ und 5 bar C₂H₄. Die Polymerisationsergebnisse sowie die verwendeten Katalysator- und Co-Katalysatormengen sind in Tabelle 3 wiedergegeben.

### Vergleichbeispiel F

In einem 4 dm³-Reaktor wurden zu 1000 cm³ Dieselöl innerhalb von 1 h bei 25°C gleichzeitig 1500 cm³ einer 0,4 molaren Lösung von Magnesium-2-methylpentyloxid in Dieselöl, 500 cm³ einer 0,36 molaren Lösung von TiCl₄ in Dieselöl und 500 cm³ einer 0,96 molaren Lösung von Al₂Et₃Cl₃, in Dieselöl zudosiert. Anschließend wurde das Gemisch mit 300 cm³ Dieselöl verdünnt, auf 120°C erhitzt und 3 h bei dieser Temperatur gerührt. Die Suspension wurde bei 100°C filtriert, das rotbraune Produkt zweimal mit 1 dm³ heißem Dieselöl gewaschen und in 1,5 dm³ Dieselöl aufgenommen.
Die Analysenergebnisse sind in Tabelle 2 wiedergegeben.

Die Polymerisation von Ethylen erfolgte entsprechend Vergleichbeispiel B, allerdings bei 2 bar H₂ und 5 bar C₂H₄. Die Polymerisationsergebnisse sowie die verwendeten Katalysator- und Co-Katalysatormengen sind in Tabelle 3 wiedergegeben.

### Beispiele 2 bis 13

### Herstellung der Komponente a

Die Herstellung der Komponente a erfolgte analog zu Beispiel 1. Die Art und Menge der vorgelegten Komponente a₀, die Menge an TCl₄, bzw. Halogenierungsmittel sowie die Zeit und die Temperatur, bei welcher die Umsetzung stattfand, sind in Tabelle 1 wiedergegeben. Die Analysenergebnisse sind in Tabelle 2 und die Polymerisationsergebnisse sind in Tabelle 3 aufgelistet.

**Tabelle 1**

| Komp. a | Komp. a₀ 10 mmol aus | Zugabe von | T[°C] | t [h] |
|---|---|---|---|---|
| Beisp.2 | Vergl. E | 50 mmol TiCl₄ | 120 | 2 |
| Beisp.3 | Vergl. F | 100 mmol TiCl₄ | 120 | 2 |
| Beisp.4 | Vergl. D | 50 mmol TiCl₄ | 120 | 2 |
| Beisp.5 | Vergl. C | 100 mmol TiCl₄ | 120 | 2 |
| Beisp.6 | Vergl. C | 50 mmol TiCl₄ | 120 | 22 |
| Beisp.7 | Vergl. E | 20 mmol TiCl₄ | 85 | 1 |
| Beisp.8 | Vergl. E | 50 mmol TiCl₄ | 85 | 1 |
| Beisp.9 | Vergl. E | 50 mmol TiCl₄ | 85 | 2 |
| Beisp.10 | Vergl. F | 100 mmol TiCl₄ | 85 | 2 |
| Beisp.11 | Vergl. D | 50 mmol TiCl₄ | 85 | 2 |
| Beisp.12 | Vergl. C | 100 mmol TiCl₄ | 85 | 2 |
| Beisp.13 | Vergl. D | 570 mmol TiCl₄ | 85 | 2 |

**Tabelle 2**

| | | | | |
|---|---|---|---|---|
| Analysenergebnisse der gewaschenen Komponenten a₀ bzw.a | | | | |

| Komponente a₀ bzw. a | Mg : Ti : Cl | Cl_{korr.}/Ti (bzw.Si) | | mmol Ti/g |
|---|---|---|---|---|
| | | beob. | (theor.) | berechnet |
| Vergl.C | 1 : 0,317 : 2,540 | 1,70 | (3) | 2,10 |
| Vergl.D | 1 : 0,336 : 2,656 | 1,95 | (3) | 2,60 |
| Vergl.E | 1 : 0,266 : 2,406 | 1,52 | (3) | 1,62 |
| Vergl.F | 1: 0,261: 2,345 | 1,33 | (3) | 1,58 |
| Beisp. 2 | 1: 0,722 : 3,78 | 2,47 | (3,64) | 2,58 |
| Beisp. 3 | 1 : 0,723 : 3,79 | 2,47 | (3,64) | 2,58 |
| Beisp. 4 | 1: 0,823 : 4,11 | 2,56 | (3,67) | 3,30 |
| Beisp. 5 | 1 : 0,755 : 4,03 | 2,68 | (3,58) | 3,23 |
| Beisp. 6 | 1 : 0,797 : 3,94 | 2,44 | (3,58) | 3,26 |
| Beisp. 7 | 1 : 0,580 : 3,56 | 2,68 | (3,54) | 2,53 |
| Beisp. 8 | 1 : 0,537 : 3,61 | 3,01 | (3,53) | 2,60 |
| Beisp. 9 | 1: 0,471: 3,226 | 2,69 | (3,39) | 2,40 |
| Beisp.10 | 1 : 0,474 : 3,336 | 2,82 | (3,45) | 2,40 |
| Beisp.11 | 1 : 0,693 : 3,49 | 2,14 | (3,61) | 3,08 |
| Beisp.12 | 1 : 0,639 : 3,64 | 2,56 | (3,50) | 3,04 |
| Beisp.13 | 1 : 0,737 : 3,773 | 2,41 | (3,54) | 3,16 |

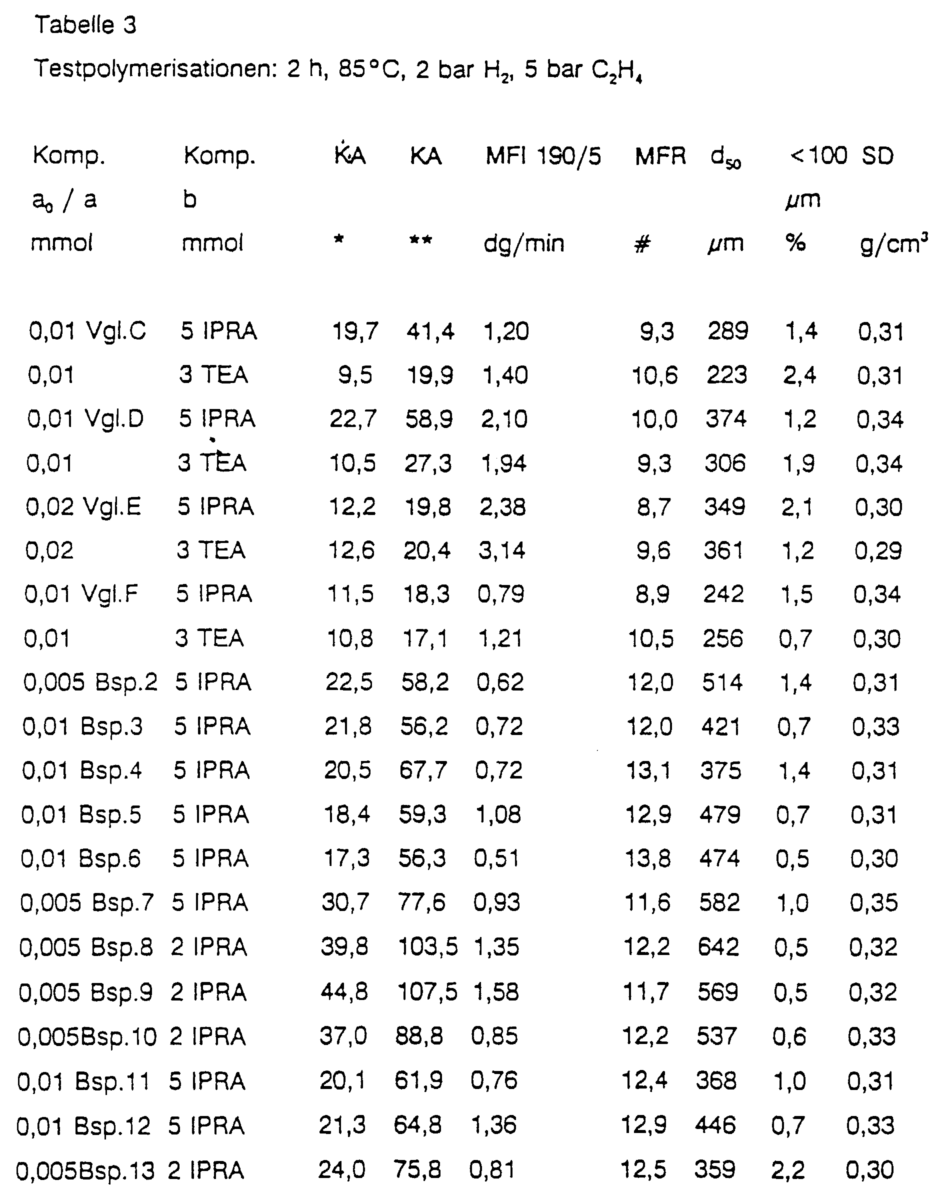

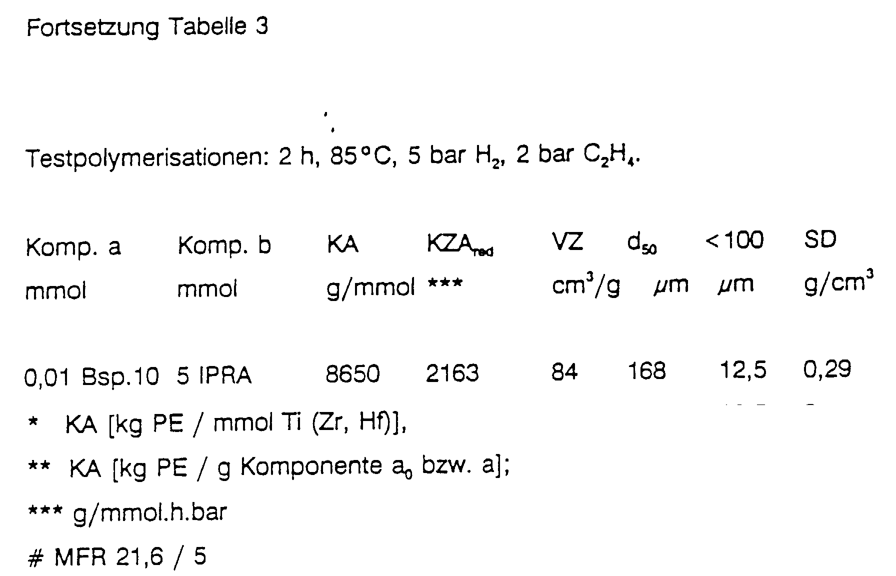

### Beispiel 16

100 dm³ Dieselöl wurden in einem 150 dm³ Reaktor vorgelegt und dieser viermal mit 2 bar Wasserstoff gespült. Danach wurden 50 mmol Isoprenylaluminium und 5,9 cm³ (0,5 mmol Ti) der Dispersion der Komponente b (Beispiel 9) eingefüllt und 0,75 bar Wasserstoff aufgedrückt. Bei einer Temperatur von 85°C wurde Ethylen mit einer Rate von 6 kg/h eingeleitet. Es wurde soviel Wasserstoff nachdosiert, daß während der gesamten Polymerisation der H₂-Gehalt im Gasraum 30 Vol.-% betrug. Nach 315 min und einem Enddruck von 8,2 bar wurde die Polymerisation durch Entspannen beendet. Die Suspension wurde filtriert und das Polyethylenpulver durch Überleiten von heißem Stickstoff getrocknet.
Es wurden 31,6 kg Polyethylen mit einer Dichte von 0,958 g/cm³ erhalten. Dies entspricht einer Kontaktaktivität von 151,7 kg Polyethylen / g Komponente a bzw. 1319 kg Polyethylen / g Ti. Das Polyethylenpulver hatte einen MFI 190/5 von 0,86, einen MFR 21,6/5 von 14,5, eine Schüttdichte von 340 g/dm³ und einen mittleren Korndurchmesser von 610 µm. Der Feinanteil <100 µm war kleiner 1%.

### Beispiel 17

Die Herstellung erfolgte analog zu Beispiel 1 mit 10 mmol Ti enthaltender Suspension aus Vergleichsbeispiel C und 50 mmol TiCl₄ in 2 h bei einer Temperatur von 80°C.
Analyse: Mg : Ti : Cl = 1 : 0,565 : 3,485;
Ti³⁺/Ti⁴⁺ = 0,53; Cl_{korr.}/Ti = 2,63;

### Copolymerisation von Ethylen mit 1-Buten

100 dm³ Dieselöl wurden in einem 150 dm³ Reaktor vorgelegt und dieser viermal mit 2 bar Wasserstoff gespült. Danach wurden 50 mmol Isoprenylaluminium und 7,2 cm³ (0,6 mmol Ti) der Dispersion der Komponente a eingefüllt und 0,75 bar Wasserstoff aufgedrückt. Bei einer Temperatur von 80°C wurden 100 cm³ 1-Buten eingefüllt und Ethylen mit einer Rate von 6 kg/h eingeleitet. Es wurde soviel Wasserstoff nachdosiert, daß während der gesamten Polymerisation der H₂-Gehalt im Gasraum 30 Vol.-% betrug. Innerhalb von 2 h wurden zusätzliche 1100 cm³ Buten eingeleitet. Nach 165 min und einem Enddruck von 8,5 bar wurde die Polymerisation durch Entspannen beendet. Die Suspension wurde filtriert und das Polyethylenpulver durch Überleiten von heißem Stickstoff getrocknet.
Es wurden 17,2 kg Polyethylen erhalten. Dies entspricht einer Kontaktaktivität von 598 kg Polyethylen / g Ti. Das Polyethylenpulver hatte einen MFI 190/5 von 3,28 dg/min, einen MFR 21,6/5 von 11,0, eine Schüttdichte von 360 g/dm³ und einen mittleren Korndurchmesser von 430 µm. Der Feinanteil <100 µm war kleiner 2%. Die Dichte betrug 0,951 g/cm³.

## Patentansprüche

1. Verfahren zur Herstellung eines Ethylenpolymers mit einheitlicher grober Partikelform und hoher Schüttdichte durch Polymerisation von Ethylen oder von Ethylen mit bis zu 10 Gew.-%, bezogen auf die Gesamtmenge der Monomeren, eines 1-Olefins der Formel R⁶-CH=CH₂, worin R⁸ einen geradkettigen oder verzweigten Alkylrest mit 1 bis 12 C-Atomen bedeutet, in Suspension, in Lösung oder in der Gasphase, bei einer Temperatur von 20 bis 120°C und einem Druck von 2 bis 60 bar, in Gegenwart eines Katalysators bestehend aus dem Reaktionsprodukt eines Magnesiumalkoholats mit einer vierwertigen Übergangsmetallverbindung und einer aluminiumorganischen Verbindung,
dadurch gekennzeichnet,
daß die Polymerisation durchgeführt wird in Gegenwart eines Katalysators, welcher aus
a) dem Gesamtprodukt aus der Reaktion:
a1) eines in einem inerten Lösemittel gelösten, suspendierten oder als Gel dispergierten Magnesiumalkoholats der Formel I
Mg(OR¹)(OR²) (I),
worin R¹ und R² gleich sind und einen unverzweigten oder verzweigten Alkylrest mit 1 bis 20 C-Atomen oder einen Rest -(CH₂)ₙOR³ bedeuten, wobei R³ ein Alkylrest mit 1 bis 4 C-Atomen und n eine ganze Zahl von 2 bis 6 ist, mit
a2)
TiCl₄ (II),
und
a3) einer aluminiumorganischen Verbindung der Formel III
AlR⁵ ₚX₃₋ₚ (III),
worin R⁵ einen Alkylrest mit 1 bis 6 C-Atomen und X ein Halogenatom bedeuten
und p eine Zahl von Null bis 3 ist, im Verhältnis Mg : Ti : Al wie 1 zu 0,05 bis 10 zu 0,01 bis 4,
Waschen des Feststoffes mit einem inerten Lösemittel, und Umsetzung mit
a4)
TiCl₄ (IV),
im Verhältnis (II) zu (IV) wie 1 zu 0,2 bis 100 und Waschen des Feststoffes mit einem inerten Lösemittel, und
b) einem Aluminiumtrialkyl mit 1 bis 6 C-Atomen in den Alkylresten oder dem Umsetzungsprodukt eines Aluminiumtrialkyls oder Aluminiumdialkylhydrids mit Isopren besteht.

## Claims

1. A process for the preparation of an ethylene polymer having a uniform coarse particle shape and high bulk density by polymerizing ethylene or ethylene with up to 10% by weight, based on the total amount of the monomers, of a 1-olefin of the formula R⁶-CH=CH₂ in which R⁶ is a straight-chain or branched alkyl radical having 1 to 12 carbon atoms, in suspension, in solution or in the gas phase, at a temperature of from 20 to 120°C and at a pressure of from 2 to 60 bar, in the presence of a catalyst comprising the product of the reaction of a magnesium alkoxide with a tetravalent transition-metal compound and an organoaluminum compound, which comprises carrying out the polymerization in the presence of a catalyst which comprises
a) the entire product from the reaction
a1) of a magnesium alkoxide of the formula I
Mg(OR¹) (OR²) (I)
in which R¹ and R² are identical and are an unbranched or branched alkyl radical having 1 to 20 carbon atoms or a -(CH₂)ₙOR³ radical where R³ is an alkyl radical having 1 to 4 carbon atoms and n is an integer from 2 to 6, with
a2)
TiCl₄ (II)
and
a3) an organoaluminum compound of the formula III
AlR⁵ ₚX₃₋ₚ (III)
in which R⁵ is an alkyl radical having 1 to 6 carbon atoms, X is a halogen atom and p is a number from zero to 3, in the Mg : Ti : Al ratio of 1 : 0.05 to 10 : 0.01 to 4,
washing the solid with an inert solvent and reacting the product with
a4)
TiCl₄ (IV)
in the (II) : (IV) ratio of from 1 : 0.2 to 100, and washing the solid with an inert solvent, and
b) a trialkylaluminum having 1 to 6 carbon atoms in the alkyl radicals or the product of the reaction of a trialkylaluminum or dialkylaluminum hydride with isoprene.

## Revendications

1. Préparation d'un polymère de l'éthylène ayant des particules grossières de forme uniforme et une densité apparente élevée, par polymérisation de l'éthylène ou de l'éthylène avec jusqu'à 10 % en poids par rapport à la quantité totale des monomères, d'une 1-oléfine de formule R⁶-CH=CH₂, dans laquelle R⁶ représente un radical alkyle linéaire ou ramifié comportant de 1 à 12 atomes de carbone, en suspension, en solution ou en phase gazeuse, à une température de 20 à 120 °C et une pression de 2 à 60 bars, en présence d'un catalyseur composé du produit réactionnel d'un alcoolate de magnésium avec un composé d'un métal de transition tétravalent et d'un composé organo-aluminié, caractérisé en ce que l'on met en oeuvre la polymérisation en présence d'un catalyseur composé
a) du produit total de la réaction
al) d'un alcoolate de magnésium suspendu, dissous ou dispersé sous forme de gel dans un solvant inerte, de formule I
Mg(OR¹) (OR²) (I),
dans laquelle R¹ et R² sont identiques et représentent un radical alkyle linéaire ou ramifié avec 1 à 20 atomes de carbone ou un radical -(CH₂)ₙOR³, OR³ étant un radical alkyle avec 1 à 4 atomes de carbone et n un nombre entier de 2 à 6, avec
a2)
TiCl₄ (II),
et
a3) d'un composé organo-aluminié de formule III
AlR⁵ ₚX₃₋ₚ (III),
dans laquelle R⁵ est un radical alkyle avec 1 à 6 atomes de carbone, X est un atome d'halogène et p va de 0 à 3, dans un rapport de Mg:M¹:Al tel que 1:0,05 à 10:0,01 à 4, lavage de la matière solide par un solvant inerte et la réaction avec
a4)
TiCl₄ (IV),
dans un rapport de (II) à (IV) tel que de 1:0,2 à 100 et lavage de la matière solide par un solvant inerte, et
b) d'un trialkylaluminium avec 1 à 6 atomes de carbone dans le radical alkyle ou du produit de réaction d'un trialkylaluminium ou d'un hydrure de dialkylaluminium avec l'isoprène.
